# EUROPEAN PATENT APPLICATION

(11) **EP 4 056 981 A1**
(43) Date of publication of application: **14.09.2022**
(21) Application number: 22161281.5
(22) Date of filing: 10.03.2022
(51) Int. Cl.: G01M 5/00, G01M 11/08

(54) **DEVICE, SYSTEM AND METHOD FOR THE INSPECTION OF A CAVITY OF A PRODUCT OR STRUCTURE**

(30) Priority: 10.03.2021 IT 202100005555
(71) Applicant: GP2 S.r.l., 25050 Pian Camuno (BS) (IT)
(72) Inventor: PELUCHETTI, Gianni, 25050 Pian Camuno (BS) (IT); GREGORINI, Paride Diego, 25050 Pian Camuno (BS) (IT)
(74) Representative: Autuori, Angelo

(57) **Abstract**

A device for supporting a laser scanner (30) for inspecting a cavity (4) of a product or load-bearing structure (1) having a hole (F) at the cavity (4), the laser scanner (30) being movable between an operative position in which it is inserted into the cavity (4) to inspect it and an inoperative position in which it is distal. The device comprises at least one support element (13) which can be coupled to the laser scanner (30) movable between a first operative position corresponding to the operative position of the laser scanner (30) and a second operative position corresponding to the inoperative position of the laser scanner (30), drive means (14) for the controlled movement of the support element (13) between the operative position and the inoperative position, fixing means (11) for fixing the support element (13) to the product (1) in a predetermined position so as to remain at the hole (F). The fixing means (11) are configured to keep the support element (13) stationary in the predetermined position upon the inspection of the cavity by the laser scanner (30). A system (10) comprising the device (100) and a laser scanner (30).

## Description

### Technical field

The present invention generally relates to the technical field of monitoring and structural diagnosis and in particular it relates to a device, a system and a method for inspecting structural elements or products with hollow cross-section.

### State of the Art

Over time, building facilities may show phenomena or signs of progressive deterioration and alteration or structural deterioration situations which manifests themselves even superficially with interruptions or integrity defects such as cracks and fissures. Acknowledging that building facilities not subjected to scheduled maintenance may be vulnerable, it has been observed that the monitoring with associated structural diagnosis may help to take prompt and effective measures to avoid hazardous situations.

The monitoring also comprises analysing the superficial alterations which can be detected by inspecting the surface and comparing the extent of such alterations with inspections on the surface carried out in a previous period. Carried out on regular intervals so as to obtain a profile of the development of the alterations over time, the inspections allow to effectively contribute to the diagnosis of the condition of the facility.

For the structural diagnosis of elements which constructively have a cavity therein, whether non-load-bearing such as for example vats or tanks or load-bearing structures such as, by way of non-limiting example, columns, piles, pillars, it is therefore indispensable to be able to verify the condition of the inner part of the structure, that is inspect the inner surfaces of the cavity to detect possible alterations, typically cracks.

Such surfaces of internal cavities are therefore not accessible from the external.

The same problem arises even when it comes to monitoring a cavity of natural origin such as caverns and natural interstices.

According to the prior art, an endoscopic video technique, in which a video camera is introduced through a hole made in the structure, is used to observe the surfaces of internal cavities. Therefore, the video camera transmits the images of the surface of the cavity.

A drawback of such known method lies in the fact that it is substantially not possible to position the video camera in a predefined point of the cavity and therefore have a reference point with respect to which measurements are to be carried out.

Another drawback of such known method lies in the fact that the images of such video cameras do not allow to determine the size of possible cracks with sufficient precision.

Another drawback lies in the fact that the movements of the video camera, for example vibration movements, although minimal, are superimposed with the measurements distorting the values thereof.

Another drawback lies in the impossibility to quantitatively compare the images of the same surface over time to detect the quantitative variation of the size of defects over time.

The known systems and methods are therefore essentially qualitative, that is they show the presence or absence of cracks, when visible, but they do not allow to determine the size thereof.

### Summary of the invention

An object of the present invention is to at least partly overcome the drawbacks illustrated above by providing a system for inspecting surfaces of internal cavities of products or structures that is highly functional and cost-effective.

A further object is to provide a system for inspecting surfaces capable of detecting defects such as cracks or fissures in structural elements or products.

A further object is to provide a system for inspecting surfaces capable of measuring the size of defects such as cracks or fissures in structural elements or products.

A further object is to provide a system for inspecting surfaces for determining the condition of wholeness of the surface of internal cavities in a product.

A further object is to provide a device for supporting a laser scanner to be used in a system for inspecting surfaces of internal cavities in a structure or product.

Another object of the present invention is to provide a method for inspecting surfaces of internal cavities of products or structures that is highly functional and cost-effective.

These and other objects which will be more apparent hereinafter, are attained by a device, a system and a method for inspecting surfaces of internal cavities as described, illustrated and/or claimed herein.

The dependent claims define advantageous embodiments of the invention.

### Brief description of the drawings

Further characteristics and advantages of the invention will be more apparent in light of the detailed description of a preferred but non-exclusive embodiment of the invention, illustrated by way of non-limiting example with reference to the attached drawings, wherein:
**FIG. 1** is a diagram of the cross-section of a product in form of a pillar with an internal cavity supporting beams and road decks;

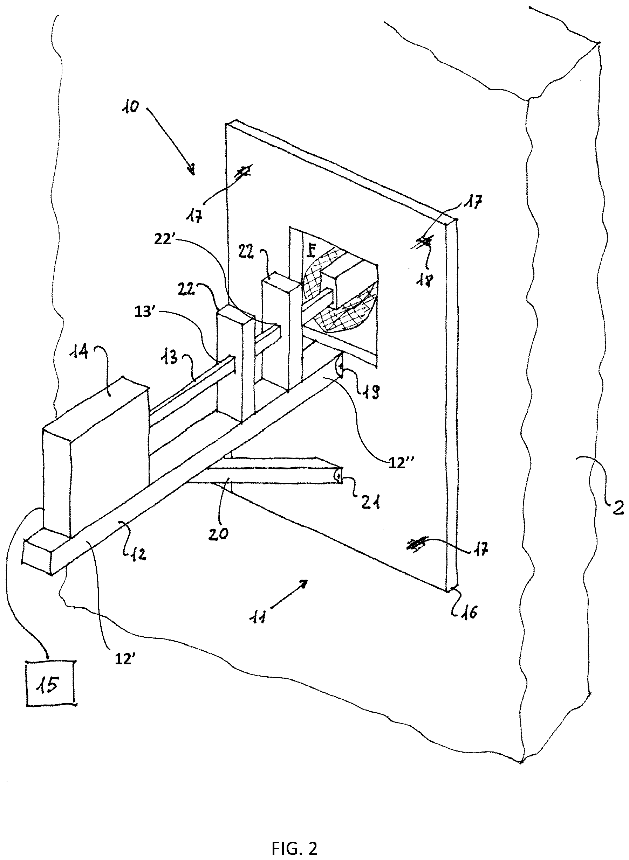

**FIG. 2** is an axonometric schematic figure of a system **10;**
**FIG. 3** is a lateral view of a schematic figure of an embodiment of the system **10** of figure 2 with a laser scanner **30** in an external position;
**FIG. 4** is a lateral view of a schematic figure of an embodiment of the device of figure 2 with the laser scanner **30** inserted into the internal cavity;

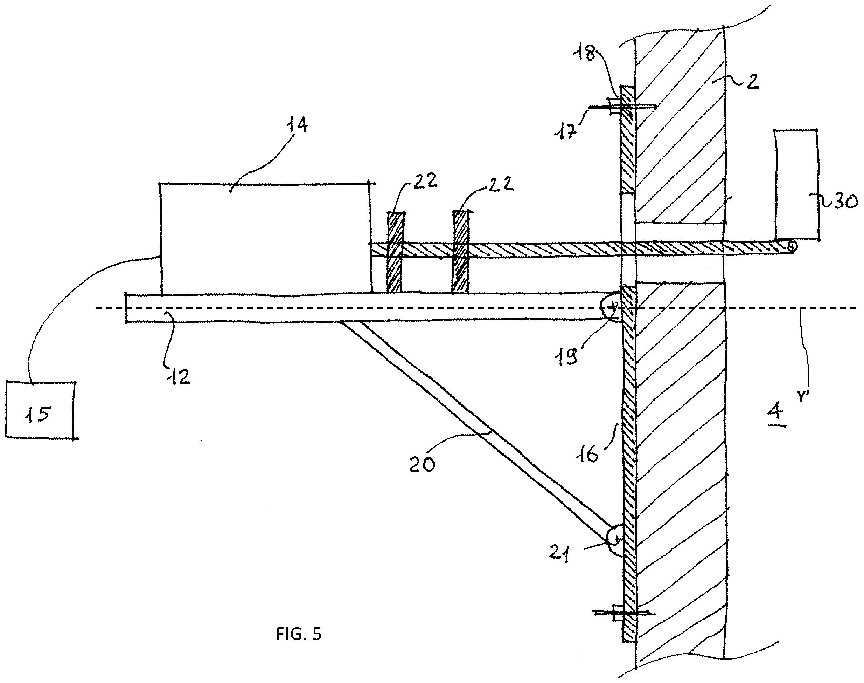

**FIG. 5** is a lateral view of a schematic figure of an embodiment of the device of figure 2 with the laser scanner **30** inserted into the internal cavity rotated to carry out the inspection of the surfaces.

### Detailed description of a preferred embodiment

With reference to the attached figures, shown is a non-exhaustive example of a system **10** for inspecting the condition of the inner surfaces of a cavity **4** in load-bearing structural elements or products **1** such as for example, columns, piles, pillars, decks, drainage system pipes, chimneys, flues, dikes for dams, or the like.

More generally, the structure or product **1** may be any type of structure or product comprising an internal cavity **4.**

Preferably, the product **1** may be made of concrete, reinforced concrete or the like.

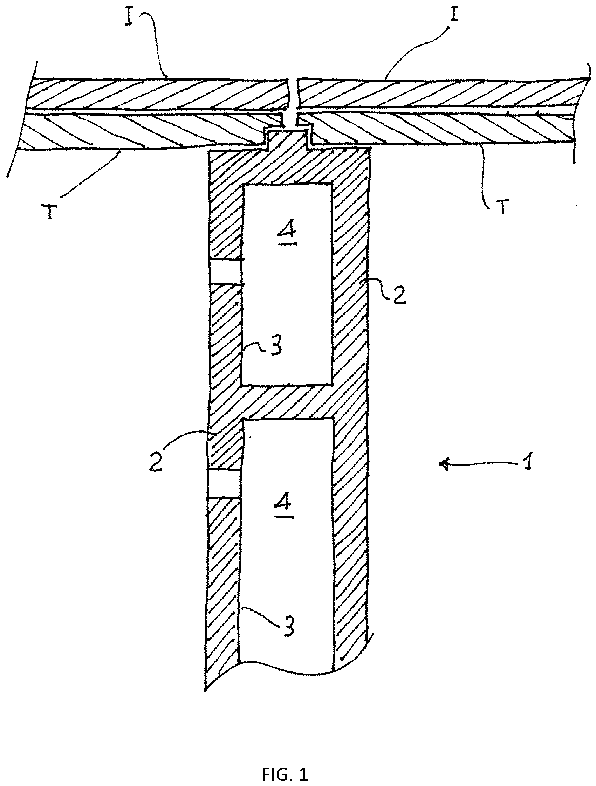

In the example shown in the attached drawings, the load-bearing structural element **1** shown in fig. 1 is a support column **1** with hollow cross-section comprising an external wall 2, at least one cavity **4** with structural walls **2** with an inner surface **3.** Structurally, the column **1** supports load-bearing beams **T** in turn supporting a deck **I.**

The expression column is used to indicate a vertical load-bearing structure, generally with a hollow cross-section, as schematically shown in figure 1, which supports two arches or bridge trusses and through which permanent loads and accidental loads caused by the traffic on the bridge are transmitted to the ground.

The system **10** for inspecting the internal cavities **4** may comprise a sensor element **30** and a device **100** for supporting the same.

Such device **100** may be fixed to the column **1.** In particular, the device **100** may be fixed to the column **1** so that the sensor element **30** is stationary during use as better explained hereinafter.

Preferably, the sensor element **30** may carry out information and data detection operations which may vary depending on the type of sensor element **30.** For example, the sensor element **30** may be a laser scanner, a thermographic camera or video camera. On the other hand, the sensor element **30** may be configured to detect various parameters such as temperature or moisture.

A lighting system supported by such device **100,** may be possibly provided for. The lighting system may therefore be associated with the sensor element **30** or it may be part thereof.

As better clarified hereinafter, the device **100** may therefore be configured to support any instrument so as to keep the latter stationary inside the cavity **4** during use.

Although described hereinafter is a sensor element in the form of a laser scanner **30,** it is clear that such embodiment is not exclusive.

In particular, the laser scanner **30** provides for detecting the inner surface **3** by sending and receiving a plurality of laser signals in a per se known manner.

Suitably, the device **100** may allow to keep the laser scanner **30** stationary during use so that the detection of the inner surface **3** is precise and therefore the inspection of the cavity **4** is precise. As known, even small vibrations could alter the results.

The device **100** may comprise fixing means **11** for the fixing thereof in a predefined position on the external of the wall **2** of the column **1** which contains the cavity **4** therein.

The fixing means **11** may comprise a support element **13** for supporting the detection laser scanner **30**. In particular, the support element **13** may be slidable along an axis **Y** between a position in which the laser scanner is external and a position in which the laser scanner is inside the cavity.

Suitably, the fixing means **13** may be configured to keep the laser scanner stationary at least in the operative position inside the cavity **4.** The expression stationary is used to indicate that the translation and the rotation of the support element **13** and the rotation of the support element **13** around the axis **Y** is prevented.

The means **11** may preferably comprise a beam-like essentially longitudinal element **12** which may define an axis **Y'.** Preferably, the axis **Y'** of the beam **12** may be substantially parallel to the axis **Y.**

Drive means **14** for the controlled movement of the support element **13** with respect to the beam **12,** that is to promote the selective sliding thereof along the axis **Y** may preferably be provided for.

A control unit **15** for controlling the drive means **14,** and possibly a logic unit for managing the detection, processing and storage of the information transmitted by the laser scanner **30** may possibly be provided for. Such logic unit may be integrated in the control unit 15.

Suitably, the control unit **15** may act on the drive means **14** to actuate the selective movement thereof and, possibly, block the sliding of the support element **13** so that it remains stationary in the operative position inside the cavity **4.**

According to a first embodiment, the fixing means **11** may comprise a base plate **16** which can be fixed to the external wall **2** of the structure **1.**

Preferably, such fixing may be carried out through fixing means **17** of the per se known type, for example expansion pins or screws.

Suitably, the base plate **16** may comprise corresponding through holes **18** for fixing means **17.** Therefore, the latter may pass through the holes **18** to interact with the wall **2,** preferably to be inserted into the wall **2.** For example, the base plate **16** may comprise four holes **18** arranged in proximity of the corners of the rectangular plate **16.**

Adjustment elements, for example of the screw type, associated with the fixing means **17** for adjusting the positioning of the base plate **16** in the desired position on the wall **2** of the structure **1** may possibly be provided for. Such aspect may be particularly useful should the wall **2** not be flat or should it reveal unevenness.

The plate **16** may not directly come into contact with the wall **2.** For example, according to a different embodiment, not shown in the figures, the base plate **16** may be part of an independent structure for example arranged adjacent to the product to be inspected, for example a lattice made specially for the purpose.

It is clear that the base plate **16** and/or the laser scanner **30** may have a size significantly smaller than that of the wall **2.** For example, the laser scanner may have an overall dimension of about 30 cm while the product **1** may be a pillar which supports a highway overpass, a cavern, a dam or other large products. As a matter fact, the base plate **2** may be coupled in any area of the wall **2** which allows access to the entire cavity **4.**

Preferably, the base plate **16** may be positioned substantially parallel to the wall **2.** In other words, the base plate **16** may define a plane **π** which may be substantially parallel to the wall **2.**

In the case of large products **1** such as highway overpass columns **1,** although the latter have a cylindrical-shaped wall **2,** the wall portion **2** involved by the wall **16** particularly small in size with respect to the entire wall **2,** may be substantially flat.

Operatively, a hole **F** may initially be made in the wall **2** at the cavity **4,** and then the plate **16** may be fixed to the wall **2.**

The plate **16** may have an opening **16'** which may remain at the hole **F** of the wall **2.** In this manner, advantageously, the plate **16** may be fixed around the hole **F.**

To fix the plate **16,** there may be positioned the expansion pins **17** and the base plate **16** may be fixed thereto so that the beam **12** and the support element **13** are at the hole **F.**

Suitably, the sliding axis **Y** of the support element **13** may be substantially transversal or perpendicular to the plane **π** of the plate **16.**

According to an embodiment of the invention, there may be provided for means for adjusting the inclination between the sliding axis **Y** of the support element **13** and the plane **π.**

This characteristic may allow to facilitate the insertion/the removal of laser scanner **30** into/from the cavity **4,** for example when the wall **2** is curved or the hole **4** is inclined or the hole **4** is in the end position and the laser scanner **30** would be too close to the inner surface **3** or in other similar situations.

Preferably, the adjustment means may adjust the inclination of the axis **Y** in a plurality of predetermined positions and keep the axis **Y** locked in such position. As a matter fact, such adjustment may be carried out before the sliding of the support element **13** so that when the latter slides, it is stable along the axis **Y.** The expression stable sliding along the axis is used to indicate that the translation of the support element **13** transversal to such axis **Y** and the rotation around the axis **Y** during the sliding is prevented.

For example, the support beam **12** may be connected to the base plate **16** in a manner orientable with respect to the plane **π** so as to allow the rotation of the beam **12** with respect to the base plate **16** in a plurality of predetermined positions so as to vary the inclination of the axis **Y'** with respect to said plane **π.**

Suitably, the beam **12** may be oriented by means of a hinge **19** and a strut **20** which may in turn be fixed to the support plate **16** by means of a hinge **21** and which is snap-coupled to the beam **12.** In particular, the strut **20** and the longitudinal beam **12** may be mutually couplable in a plurality of predetermined positions so as to vary the inclination of the beam **12** therefore defining the aforementioned adjustment means.

In other words, the beam **12,** strut **20** and plate **16** may form a triangular structure which may confer particular stability to the device **100.** Varying one of the sides of the triangle may allow to vary the angle between the beam **12** and plate **16** and therefore the inclination of the axis **Y.** It is clear that the example described above which provides for a pair of hinges **19** and a coupling between the beam **12** and strut **20** is a preferred but not exclusively embodiment.

As a matter fact, such configuration described above is particularly simple and cost-effective to manufacture. However, a similar adjustment may be obtained by means of hydraulic plungers or other systems of the per se known type.

In the schematically illustrated embodiment as an example in the attached drawings, the beam **12** extends substantially orthogonal to the plate **16.** The beam **12** may take any inclination with respect to the base plate **16** depending on the operating needs.

The support element **13** may be a stem, a track or other slidable longitudinal element.

The longitudinal support element **13** may be associated with the beam **12** by means of guide elements **22.** The guide elements **22** may guide the sliding of the longitudinal support element **13** along the axis **Y** in a stable manner.

For example, the guide elements may comprise supports **22** capable of preventing the movements transversal to the axis **Y,** even due to vibration. In particular, the supports **22** may prevent the translation of the support element **13** with respect to the plane **π** in a direction transversal to the axis **Y** and to prevent the rotation of the support element **13** around the axis **Y.**

Preferably, such movement may be prevented during the sliding of the support element between the inoperative and operative position so that the support element **13** slides stably. The support element **13** is therefore capable of slidably moving only along the longitudinal axis **Y.**

In greater detail, the support element **13** may have at least one shaped portion **13'** while the guide element **22** may include a corresponding counter-shaped portion **22'** designed to mutually interact to allow the sliding along the axis **Y** as described above. Preferably, the entire support element **13** may be shaped so as to simplify the manufacturing thereof.

Suitably, the support element **13** may have at least one polygonal portion, for example it may have a rectangular cross-section, while the guide element **22** may comprise a through opening **22'** for the portion **13'** having a polygonal cross-section, for example rectangular, so as to define the counter-shaped portion **22'.** This will allow to prevent both the translation and the rotation around the axis **Y.**

The supports **22** may be positioned on the beam **12** and they may be integrally coupled therewith. Preferably, at least one pair of supports **22** spaced from each other, preferably at the opposite ends **12', 12"** of the beam **12** may preferably be provided for. This may advantageously allow to have particular stability upon sliding and may ensure that the support element 13 is kept stationary in operative position.

Possibly, the drive means **14** may define one of the guide elements **22.**

It is clear that once in the operative position, suitable stop means may be provided for to selectively prevent the sliding thereof along the axis **Y** toward the inoperative position. For example, the drive means **14** may operate as a stop element by using suitable control means **15** acting thereon. Or appropriate mechanical stop elements such as keys or pins may be provided for.

In other words, when the support element **13** is in the operative position extended inside the cavity **4 the** means **22** may cooperate with the stop means, for example drive means **14,** to keep the support element **13** stationary thus allowing to precisely carry out the inspection using the laser scanner.

Advantageously, the configuration mentioned above allows to position the device **100** with any orientation and the sliding axis **Y** may have any orientation.

In other words, the wall **2** may have any inclination. For example, it may be vertical, inclined or horizontal. In the latter case, access thereto may advantageously be allowed from the bottom or from the top. In other words, thanks to the device **100** the support element **13** may slide toward the operative position with the same, opposite or inclined direction with respect to the force of gravity.

Thanks to this characteristic, the device **100** and the system may be particularly versatile.

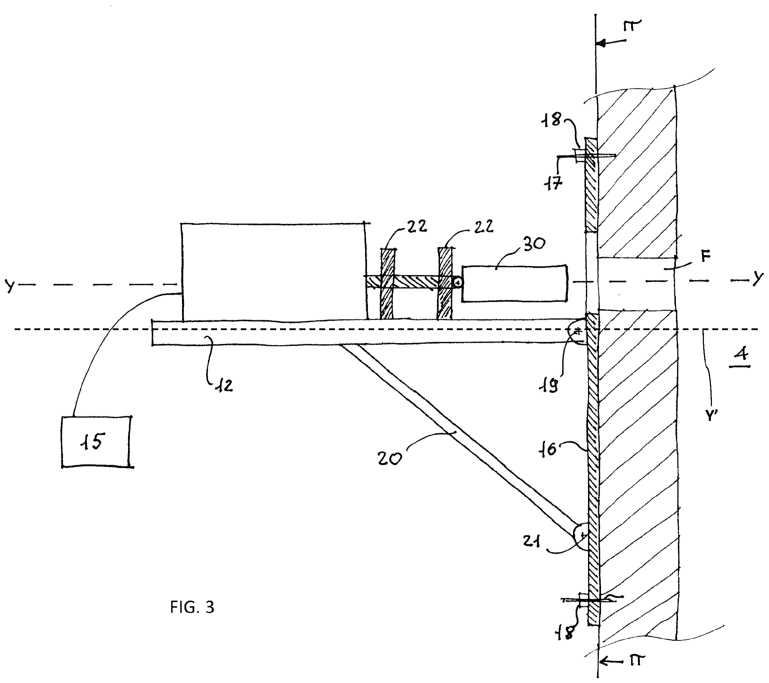

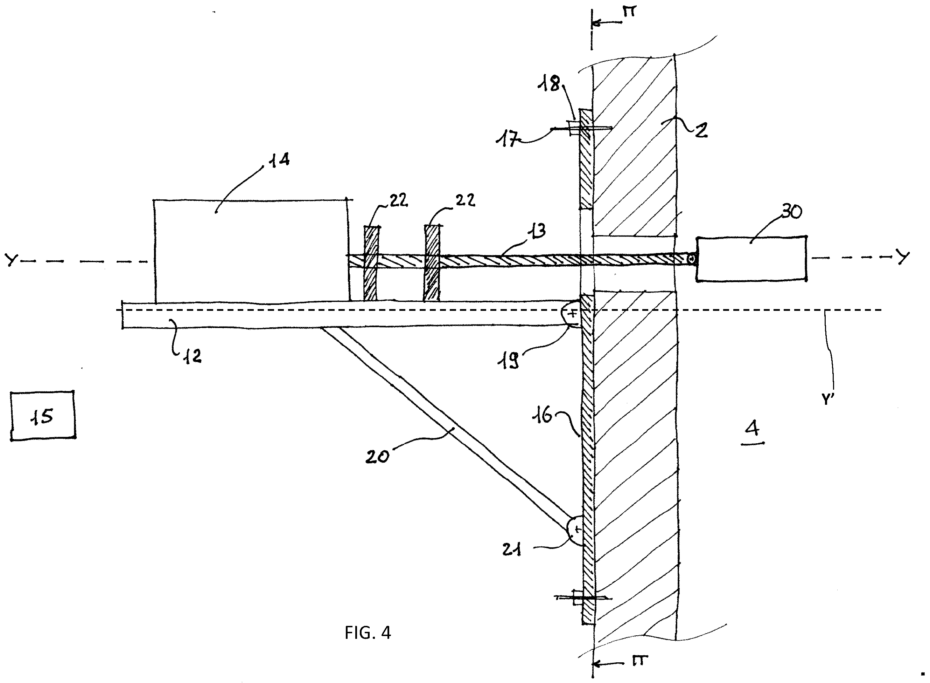

Operatively, upon positioning the device **100,** the support element **13** may move between an external operative position, shown in fig. 3, in which the laser scanner **30** is in an inoperative position outside the cavity **4** to an internal operative position, shown in figure 4, wherein the laser scanner **30** is in the operative position inside the cavity **4.** In such operative position, the laser scanner **30** is ready to carry out the detection on the surface **3** of the cavity **4.**

The laser scanner **30** may therefore pass through the opening **16'** and the hole **F** moving from the operative and inoperative positions.

The laser scanner **30** may be moved from the external inoperative position to the internal operative position through movement drive means **14** which act on the support element **13.**

The movement drive means **14** may be any of the per se known type provided that they allow precise introduction of the instrument **30** for detecting the surface of cavity into the cavity **4.**

For example, the movement drive means **14** may comprise a rack and pinion mechanism or a plunger-type actuator, or electromagnetic actuators or electric motors or combinations thereof, all of the type per se known to the person skilled in the art.

According to an embodiment, the movement drive means **14** may be controlled manually in loco or by means of a control unit **15** in loco or in remote mode provided with a per se known human/machine interface which can be connected to movement drive means **14** through a physical line or wireless mode.

The images detected by the laser scanner **30,** may be stored and processed in such control unit **15.**

According to another embodiment, the movement drive means 14 may be controlled by means of data processing logic units, for example a cpu. Such logic units may be on board the device **100** for example associated with the movement drive means **14,** or in the control unit **15,** local or remote connected through physical line or wireless mode.

The laser scanner **30** may be of the per se known type. Laser scanners derived from the combination of laser distance meters with mechanical apparatuses allow to detect three-dimensional objects.

According to the invention, the laser scanner sensor **30** associated with the terminal portion of the support element **13** is capable of rotating with respect to such terminal portion. In particular, the laser scanner **30** may rotate around one or more axes so as to carry out a substantially all-round scanning. Such movement may be carried out with drive means **31** of the per se known type.

The laser scanner **30** allows to carry out a laser scanning of the per se known type, acquiring a distance along a plurality of directions. The set of such acquired points allows to reconstruct the three-dimensional image of the object subject of observation, and therefore of the cavity.

Furthermore, the device **100** allows to keep the support element **13** stationary when scanning the cavity **4.** Such characteristics allow to scan the cavity **4** in the absence of light in a particularly precise manner.

This may allow to determine the number and size of the cracks.

The angular movement may be continuous or at predetermined angular intervals.

The rotary drive means **31** may be any of the per se known type provided that they allow the rotation of the laser scanner **30** by identifying and rotating the rotation angle with respect to a direction taken as the reference direction.

According to an embodiment, the rotary drive means **31** may be controlled manually in loco or in remote mode by means of human/machine interface per se known and connectable to rotary drive means **31** by means of a physical line or wireless mode.

According to another embodiment, the rotary drive means **31** may be controlled by a control and processing unit **15** connected by means of physical line or wireless mode.

Operatively, the laser scanner **30** is applied to the terminal portion of the support element **13** which is in turn associated with the beam **12** and connected to drive means **14.** By means of the control unit **15,** the support element **13,** actuated by drive means **14** is moved along the beam **12** in the axial direction thereof to introduce the laser scanner **30** through the hole **F** in the cavity **4.** Once introduced, the laser scanner **30** is controllably rotated so as to scan the entire internal wall.

In this manner there is acquired a three-dimensional image of the internal wall of the cavity **4.**

The electromechanical and electronic control - whether in loco or through a data control and processing unit - allows to precisely fix the position of the laser scanner **30** in the cavity **4.**

Furthermore, the absence of vibrations and the precision of the movement of the support element **13** guided by supports **22** prevents the superimposition and interference of the relative movement of the laser scanner **30** upon the detection of the scan.

As a matter fact, any vibration is summed to the movement of the laser scanner introducing a distortion in the detection obtained.

Furthermore, the laser scanner **30** can be positioned in the same position at subsequent times and therefore obtain a historical sequence of the three-dimensional scans of the surfaces and evaluate possible deterioration changes of the surfaces that appeared over time, that is subsequent inspections.

Operatively, the laser scanner **30** and the support device **100** may therefore be provided.

Therefore, the device **100** may be fixed to the wall **2** using fastening screws **17** and possibly adjust the inclination of the beam **12** and/or adjust the plate **16.** Once the entirety has been fixed it may be possibly verified whether the support element **13** coupled to the beam **12** by means of guide elements **22** is stationary, that is it does not move transversely to the axis Y and rotatably with respect thereto.

Therefore, the support element **13** may be brought to the inoperative position distal from the wall and the laser scanner may be coupled therewith. Possibly, such step may be carried out prior to fixing the device **100** to the wall **2.**

Therefore, the laser scanner **30** may be moved manually or by means of drive means **14** toward the operative position inside the cavity **4** in which the support element **13** is stationary. Possibly, it may be allowed to operate on the drive means **14** to lock the sliding thereof even along the axis **Y.**

Once through with scanning, which may provide for the rotation of the laser scanner **30** alone while the support element **13** is stationary, the latter may also be unlocked to allow the sliding thereof toward the inoperative position.

Possibly, such method may be preceded by a step for obtaining the hole **F** in the wall **2** of the product or load-bearing structure.

The method further comprises the step for analysing the structure to be monitored, including the detection of the structural dimensions and the presence of possible inspection openings for defining the place where the inspection holes **F** are to be made.

Furthermore, it can be advantageously used for inspecting walls of cavities of natural origin such as caverns and natural interstices regarding which it is required to verify the condition of the inner part that is to inspect the surfaces to detect the morphology, type and condition of preservation thereof as well as modification over time. Such surfaces may be not accessible to the external, or they are accessible but with difficulty due to the dimensional characteristics of the space or for the safety of the operator.

The invention is susceptible to numerous modifications and variants, all falling within the scope of protection of the attached claims. All details can be replaced by other technically equivalent elements, and the materials can be different depending on the technical needs, without departing from the scope of protection defined by the attached claims.

## Claims

1. A device for supporting a laser scanner **(30)** for precisely inspecting an inner cavity **(4)** of a product or load-bearing structure **(1)** having a hole **(F)** for access to the cavity **(4),** the laser scanner **(30)** being movable between an operative position in which it is inserted into the cavity **(4)** to inspect it and an inoperative position in which it is distal therefrom,
the device comprising:
- at least one support element **(13)** which can be coupled with the laser scanner **(30)** selectively movable between a first operative position corresponding to the operative position of laser scanner **(30)** and a second operative position corresponding to the inoperative position of laser scanner **(30);**
- drive means **(14)** for the controlled movement of said support element **(13)** between the first and second operative position;
- fixing means **(11)** for fixing said at least one support element **(13)** to the product or load-bearing structure **(1)** in a predetermined position so as to remain at the hole **(F);**
wherein said fixing means **(11)** are configured to keep said at least one support element **(13)** stationary in said operative position to allow the precise inspection of the cavity by the laser scanner **(30).**

2. Device according to claim 1, wherein said at least one support element **(13)** defines a first longitudinal axis **(Y),** said fixing means **(11)** comprising a base plate **(16)** designed to be fixed to the wall **(2)** defining a plane **(π)** substantially transversal with respect to a first axis **(Y),** said fixing means **(11)** comprising at least one guide element **(22)** to guide said support element **(13)** from the first operative position to the second operative position and vice versa along said first axis **(Y)** irrespective of the orientation of said base plate **(16).**

3. Device according to claim 2, wherein said base plate **(16)** comprises an opening **(16')** designed to remain at the hole **(F),** said support element **(13)** being selectively slidable through said opening **(16')** between the first and the second operative position along said first axis **(Y),** said base plate **(16)** comprising a plurality of through holes **(18)** and fixing elements **(17)** which can be inserted into the wall **(2)** through said through holes **(18)** for fixing said base plate **(16)** to the wall **(2)** of the product or load-bearing structure **(1).**

4. Device according to claim 2 or 3, wherein said at least one guide element **(22)** is configured to prevent the translation of said support element **(13)** with respect to said plane **(π)** in a direction transversal to said first axis **(Y)** and to prevent the rotation of said support element **(13)** around said first axis **(Y)** when said support element **(13)** is in said first operative position so that the latter is stationary.

5. Device according to the preceding claim, wherein said fixing means **(11)** comprise a longitudinal beam **(12)** defining a second axis **(Y')** substantially parallel to said first axis **(Y),** said at least one guide element **(22)** being integrally coupled with said longitudinal beam **(12),** said support element **(13)** having at least one first shaped portion **(13'),** said at least one guide element **(22)** including a second counter-shaped portion **(22')** with respect to said first shaped portion **(13')** and designed to interact therewith to allow the sliding of said support element **(13)** along said first axis **(Y)** and prevent the sliding of said support element **(13)** with respect to said plane **(π)** in a direction transversal to said first axis **(Y)** and to prevent the rotation of said support element **(13)** around said first axis **(Y).**

6. Device according to the preceding claim, comprising at least one first guide element **(22)** in proximity of an end **(12')** of said longitudinal beam **(12)** and at least one second guide element **(22)** in proximity of an opposite end **(12")** of said longitudinal beam **(12)** so that said at least one first and second guide element **(22)** are spaced from each other along said first axis **(Y).**

7. Device according to claim 5 or 6, wherein said first shaped portion **(13')** of said support element **(13)** has a polygonal cross-section, said at least one guide element **(22),** or said at least one first and one second guide element **(22),** comprises a through opening **(22')** for said first shaped portion **(13')** of said support element **(13)** having a polygonal cross-section defining said second counter-shaped portion **(22').**

8. Device according to claim 5, 6 or 7, wherein said fixing means **(11)** comprise a strut **(20)** for rigidly coupling said base plate **(16)** and said longitudinal beam **(12)** so that the latter does not rotate with respect to said plane **(π)** and with respect to said second axis **(Y')** when said support element **(13)** is in said operative position, or so that said longitudinal beam **(12)** does not rotate with respect to said plane **(π)** and with respect to said second axis **(Y')** when said support element **(13)** is in said operative position and during the selective movement thereof between said first and second operative position.

9. Device according to any one of claims 5 to 8, comprising adjustment means for selectively adjusting the inclination of said first sliding axis (Y) of said support element **(13)** with respect to said plane **(π).**

10. Device according to the preceding claim, comprising hinge means **(19)** to allow the rotation of said longitudinal beam **(12)** with respect to said base plate **(16)** in a plurality of predetermined positions and so as to vary the inclination of said first sliding axis **(Y)** with respect to said plane **(π),** said strut **(20)** and said longitudinal beam **(12)** being mutually couplable in a plurality of predetermined positions so as to vary the inclination of said longitudinal beam **(12)** defining said adjustment means.

11. Device according to any one of the preceding claims, further comprising control means **(15)** acting on said drive means **(14)** to lock said support element **(13)** in said first operative position, said drive means **(14)** preferably defining one of said at least one first and one second guide element **(22).**

12. A system for inspecting an internal cavity **(4)** of a product **(1)** or a load-bearing structure such as a pillar, the internal cavity **(4)** including an inner surface **(3)** to be inspected, the product comprising a wall **(2)** with a hole **(F)** arranged at the cavity **(4),**
the system comprising:
- a laser scanner **(30)** movable between an operative position in which it is inserted into the cavity **(4)** and an inoperative position in which it is distal therefrom;
- a support element **(100)** according to any one of the preceding claims comprising at least one movable support element **(13)** for said laser scanner **(30)** and means **(11)** for fixing said support device **(100)** to the wall **(2);**
- second rotary drive means **(31)** acting on said laser scanner **(30)** for driving it in rotation with respect to said support element **(13)** when it is in said operative position to inspect the inner surface **(3);**
wherein said support device **(100)** comprises guide means **(22)** operatively coupled with said fixing means **(11)** and with said support element **(13)** to prevent the translation and the rotation of the latter when it is in said operative position so that it is kept stationary in said operative position upon the rotation of said sensor element **(30).**

13. A method for inspecting an inner surface of a product **(1)** or a load-bearing structure such as a pillar, the product or load-bearing structure comprising an internal cavity **(4)** to be inspected and a wall **(2),** the method comprising the steps of:
- providing a laser scanner **(30)** and a support device **(100)** according to any one of claims 1 to 9 comprising at least one element **(13)** for supporting said laser scanner **(30);**
- fixing said support device **(100)** to the wall **(2)** of the product or load-bearing structure **(1)** so that said support element **(13)** is stationary in a first operative position;
- coupling said laser scanner **(30)** with said support element **(13);**
- first movement of said support element **(13)** from said first operative position wherein said laser scanner is distal from the wall **(2)** to a second operative position wherein said laser scanner **(30)** is inside said cavity **(4);**
- second rotary movement of said laser scanner **(30)** for inspecting the cavity **(4)** while said support element **(13)** is kept stationary in said second operative position.

14. Method according to the preceding claim, comprising a step for providing a hole **(F)** in the wall **(2)** of the product or load-bearing structure.

15. Method according to the preceding claim, further comprising a step for verifying the stationary positioning of said support element **(13)** in said first operative position prior to said coupling step of said laser scanner **(30)** with said support element **(13).**
